# FASCICULE DE BREVET EUROPEEN

(11) **EP 3 645 914 B1**
(45) Date de publication et mention de la délivrance du brevet: **25.10.2023**
(21) Numéro de dépôt: 18737828.6
(22) Date de dépôt: 26.06.2018
(51) Int. Cl.: F16H 25/20, B64C 25/26

(54) **DISPOSITIF DE VERROUILLAGE POUR ACTIONNEUR ELCTROMECANIQUE ET ACTIONNEUR ELECTROMECANIQUE COMPRENANT CE DISPOSITIF**
VERRIEGELUNGSVORRICHTUNG FÜR EINEN ELEKTROMECHANISCHEN AKTUATOR UND ELEKTROMECHANISCHER AKTUATOR MIT DIESER VORRICHTUNG
LOCKING DEVICE FOR ELECTROMECHANICAL ACTUATOR AND ELECTROMECHANICAL ACTUATOR COMPRISING THIS DEVICE

(30) Priorité: 29.06.2017 FR 1756035
(43) Date de publication de la demande: 06.05.2020
(73) Titulaire: Safran Electronics & Defense Actuation, 89000 Auxerre (FR)
(72) Inventeur: HORS, Daniel, 89000 Auxerre (FR); DELONG, Joffrey, 89000 Auxerre (FR)
(74) Mandataire: Casalonga
(86) Numéro de dépôt international: PCT/EP2018/067099
(87) Numéro de publication internationale: WO 2019/002285

(56) Documents cités:
- EP-A1- 2 149 496
- WO-A1-2008/102067
- FR-A1- 2 402 790
- GB-A- 2 501 908

## Description

La présente invention concerne les actionneurs électromécaniques et concerne plus particulièrement un dispositif interne de verrouillage d'un tel actionneur. L'invention concerne en particulier un actionneur électromécanique ainsi qu'un dispositif de verrouillage correspondant destiné à être utilisé en avionique.

Dans une application particulièrement intéressante, l'invention se rapporte à un actionneur électromécanique de train d'atterrissage pour aéronef.

On connaît déjà des vérins à verrouillage à griffes susceptibles d'être utilisés pour la manoeuvre et le contreventement d'organes équipant les trains d'atterrissage d'avions, et leur verrouillage en position basse.

Les trains d'atterrissage escamotables sont en général activés hydrauliquement sous l'effet d'une pression de manoeuvre.

On connaît des architectures de trains d'atterrissage comprenant un ou plusieurs verrous externes ou internes à l'actionneur hydraulique. Ces verrous peuvent être couplés à un ou plusieurs indicateurs pour indiquer que le train est en position et verrouillé.

Il a notamment été développé des dispositifs de verrouillage à griffes adaptés à des architectures comprenant des actionneurs en prise directe sur des trains d'atterrissage hydrauliques et supportant tous les efforts s'appliquant sur les trains.

Cependant, le système d'actionnement et de verrouillage des trains hydrauliques présente certains inconvénients, comme de nécessiter des équipements supplémentaires, tels que des pompes et des circuits à haute-pression.

En outre, le système d'actionnement et de verrouillage des trains d'atterrissage doit respecter la règlementation qui impose un verrouillage par complémentarité de forme, ou « positif » en position de sortie. Le document EP2 149 496 A1 divulgue un actionneur électromécanique. Un moyeu est fixé à l'écrou et comprend une pluralité de crochets élastiques dont chacun comprend une saillie s'étendant vers l'extérieur au voisinage d'une extrémité libre de celui-ci. Un élément de verrouillage tubulaire est monté coulissant à l'intérieur du boîtier et peut coulisser entre une position verrouillée et une position libérée, un ressort poussant l'élément de verrouillage vers la position verrouillée. Un actionneur à solénoïde est actionné pour déplacer l'élément de verrouillage vers la position libérée.

Les exigences en matière de fiabilité et de sûreté imposent, de surcroît, d'obtenir une information « train sorti et verrouillé » fiable.

Le but de l'invention est donc de proposer un dispositif de verrouillage pour actionneur électromécanique ainsi qu'un actionneur électromécanique doté d'un tel dispositif de verrouillage assurant un verrouillage automatique de l'actionneur et capable en outre de s'activer et se désactiver automatiquement et de fournir une information fiable de la position de verrouillage de l'actionneur.

La présente invention a ainsi pour objet un dispositif de verrouillage pour actionneur électromécanique comprenant une tige mobile par rapport à un cylindre sous l'action d'un moteur d'actionnement de la tige.

Ce dispositif comprend un ensemble d'au moins un crochet déplaçable entre une position de verrouillage dans laquelle lesdits crochets s'encliquètent dans une empreinte et une position de déverrouillage dans laquelle ledit ensemble de crochets est dégagé de l'empreinte, ledit ensemble de crochets et l'empreinte étant prévus l'un sur le cylindre et l'autre sur la tige.

Il comporte en outre un verrou coulissant par rapport auxdits crochets et à l'empreinte entre une position de maintien desdits crochets en position de verrouillage et une position de libération desdits crochets sous l'action du moteur d'actionnement de la tige.

Le verrou permet ainsi un blocage automatique des crochets dans l'empreinte et un verrouillage consécutif de l'actionneur, lorsque la tige de l'actionneur atteint sa position de bout de course.

Par exemple, lorsque la position de verrouillage de l'actionneur correspond à la position entièrement déployée de la tige, le verrouillage de l'actionneur s'obtient automatiquement sous l'action du moteur d'actionnement de la tige.

Selon une autre caractéristique, le dispositif comprenant un écrou lié au verrou et apte à déplacer le verrou coulissant à l'encontre d'un ressort de verrouillage entre une position de verrouillage dans laquelle le verrou coulissant recouvre au moins partiellement le crochet et une position de déverrouillage libérant le crochet.

Par exemple, le verrou est positionné par rapport auxdits crochets de sorte que le verrou soit escamoté à l'encontre de l'effort exercé par le ressort sous l'action desdits crochets.

Dans un mode de réalisation, le crochet comporte au moins un pan incliné apte à coopérer avec une rampe de forme correspondante de l'empreinte.

Le dispositif de verrouillage peut en outre comporter un ressort de déverrouillage destiné à être disposé entre l'écrou de l'actionneur et la tige de l'actionneur.

Par exemple, le ressort de déverrouillage est précontraint en compression.

Avantageusement, le dispositif comprend en outre au moins un capteur de position du verrou coulissant.

Il peut en outre comporter un moteur de commande du déplacement du verrou apte à provoquer le déplacement du verrou lors du déverrouillage. Un tel moteur peut être utilisé, par exemple, pour assurer le déverrouillage de l'actionneur lorsque la position de verrouillage correspond à une position rentrée de la tige.

L'invention a également pour objet un actionneur électromécanique, comprenant une tige mobile par rapport à un cylindre sous l'action d'un moteur d'actionnement de la tige, et comprenant un dispositif interne de verrouillage tel que défini ci-dessus.

Dans un mode de réalisation, cet actionneur comprend un ensemble d'au moins un crochet prévu sur le cylindre et une empreinte prévue sur la tige de sorte que le dispositif de verrouillage agisse en position déployée de la tige. Il comprend en outre un verrou monté de manière coulissante autour de la tige de l'actionneur et un ressort de verrouillage interposé entre le verrou et une butée liée au cylindre, le verrou étant déplaçable d'une position de verrouillage dans laquelle le verrou coulissant recouvre au moins partiellement le crochet à une position de déverrouillage libérant le crochet, sous l'action desdits crochets, à l'encontre de l'effort exercé par le ressort de verrouillage.

D'autres buts, avantages et caractéristiques de l'invention apparaîtront à la lecture de la description suivante, donnée uniquement à titre d'exemple non limitatif et faite en référence aux dessins annexés, sur lesquels :
- la figure 1 représente une coupe d'un dispositif de verrouillage d'un actionneur électromécanique conforme à l'invention, en position verrouillée ; et
- les figures 2 à 5 illustrent différentes phases de fonctionnement d'un exemple de réalisation d'un actionneur électromécanique doté d'un dispositif de verrouillage conforme à l'invention.

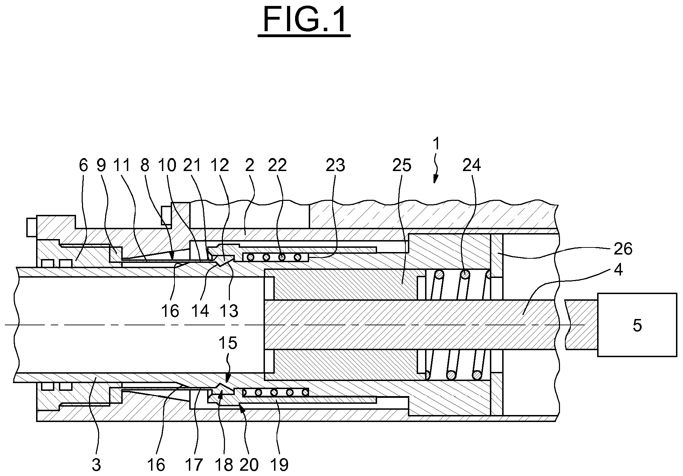

On se référera tout d'abord à la figure 1 qui illustre un exemple de réalisation d'un dispositif de verrouillage pour actionneur électromécanique conforme à l'invention, désigné par la référence numérique générale 1.

Dans l'exemple de réalisation envisagé, cet actionneur constitue un actionneur de train d'atterrissage pour aéronef, dont la position sortie constitue une position de verrouillage automatique.

Bien entendu, on ne sort pas du cadre de l'invention lorsqu'un tel actionneur est destiné à être utilisé dans d'autres applications, par exemple en tant qu'actionneur de commande d'un inverseur de poussée.

L'actionneur 1 comprend un cylindre 2 et une tige de piston 3 déplaçable dans le cylindre entre une position entièrement déployée, qui correspond à une position de sortie du train et une position escamotée, qui correspond à une position de rentrée du train d'atterrissage, sous l'action d'une vis motorisée 4, par exemple associée à un moteur 5 d'actionnement de l'actionneur 1 illustré de manière schématique.

Sur la figure 1, la tige est représentée dans une position déployée.

Comme on le voit, l'extrémité distale du cylindre est dotée d'un capot 6 qui est pourvu d'un passage central pour la tige de piston.

L'actionneur est par ailleurs doté d'un dispositif de verrouillage qui agit sur la tige de piston pour la verrouiller en fin de course. Dans l'exemple de réalisation de la figure 1, le dispositif de verrouillage agit sur la tige lorsque celle-ci est en position entièrement déployée.

Dans ce mode de réalisation, le dispositif de verrouillage est activé et désactivé sous l'action de la vis motorisée 4 de sorte qu'il est automatiquement activé lorsque la vis provoque le déplacement en fin de course de déploiement de la tige 3.

Le dispositif de verrouillage comprend un ensemble de griffes 8 dotées chacune d'un pied 9 ou d'un pied commun fixé en translation entre le cylindre 2 et le capot 6. Les griffes 8 sont chacune pourvues à leur extrémité libre d'un crochet élastique 10 comprenant un bras élastique 11 et une tête d'extrémité 12 comprenant une face interne, tournée vers la tige 3, biseautée, de manière à délimiter deux surfaces en rampe proximale 13 et distale 14.

La tige de piston 3 comporte par ailleurs une empreinte 15 pratiquée sur la surface périphérique externe de la tige.

Dans le mode de réalisation illustré à la figure 1, cette empreinte forme un logement de forme complémentaire de celle de la tête 12 des griffes. Ainsi, en fin de course, les têtes viennent s'encliqueter dans l'empreinte de la tige 3.

Comme on le voit, la surface périphérique externe de la tige 3 comporte ainsi, pour chaque griffe, une première rampe 16, un méplat 17 et un logement 18 qui coopèrent successivement avec la tête de la griffe lorsque la tige est déplacée vers sa position entièrement déployée. Avantageusement, le cylindre comporte une zone interne tronconique située autour des griffes pour permettre leur débattement angulaire, lors de la déformation élastique des griffes 8.

Le dispositif de verrouillage comporte par ailleurs un verrou coulissant 19 monté de manière coulissante autour de la tige de piston 3.

Ce verrou 19 constitue un tiroir mobile sous l'action de la vis 4, réalisé par exemple sous la forme d'une pièce annulaire entourant la tige 3. Il comporte ici une tête 20 comportant un logement distal 21 annulaire de forme complémentaire de celle de la face externe plane des têtes 12 des griffes de sorte que l'extrémité libre des griffes vient se loger dans le logement 21 en position de verrouillage et soit maintenue en butée radiale dans le logement 18 de la tige 3.

Le dispositif de verrouillage est complété par un ressort de verrouillage 22 disposé entre un épaulement annulaire 23 de la tige et la tête 20 du verrou et un ressort de déverrouillage 24, précontraint, interposé entre un écrou à recirculation de billes 25 vissé sur la vis motorisée 4 et en butée contre la tige 3 et une butée d'extrémité 26 solidaire de l'extrémité proximale de la tige 3.

L'actionneur 1 est verrouillé lorsque la tige est en fin de course, comme représenté. Dans cette position, la tête des griffes est engagée dans le logement 14 de la tige 3 et est maintenue dans ce logement sous l'action du verrou 19. Une charge externe tendant à faire rentrer la tige 3 dans le cylindre 1 est reprise au niveau du dispositif de verrouillage comprenant le crochet 10 des griffes 8, l'empreinte 15 et le verrou coulissant 19.

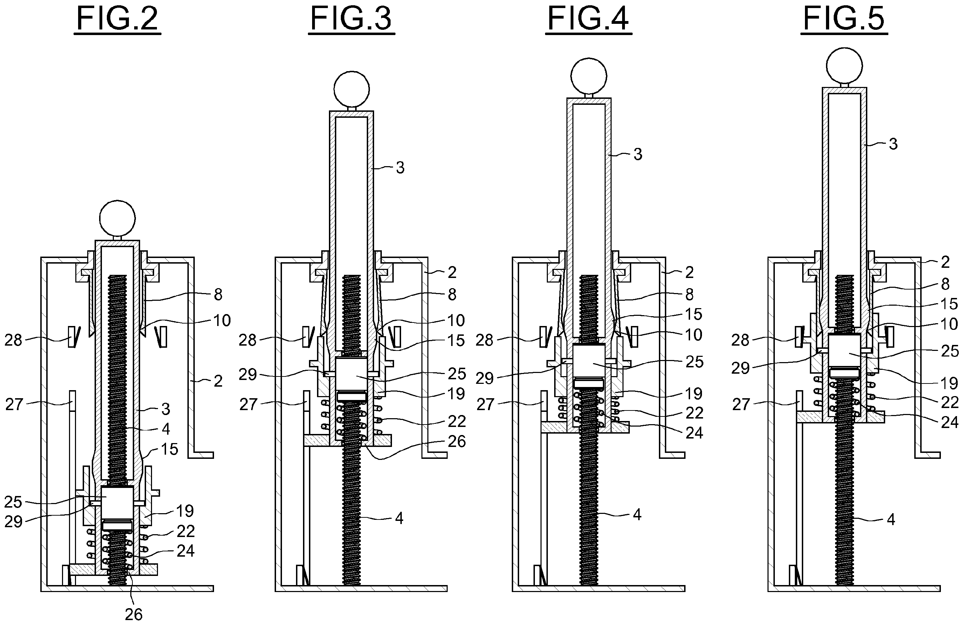

On va maintenant décrire en référence aux figures 2 à 5, sur lesquelles des éléments identiques à ceux de la figure 1 portent les mêmes signes de référence, le fonctionnement de l'actionneur et de son dispositif de verrouillage qui viennent d'être décrits.

Sur ces figures, on reconnaît le cylindre 2 et la tige de piston 3 déplaçable dans le cylindre sous l'action de la vis motorisée 4, et le dispositif de verrouillage comprenant les griffes 8, l'empreinte 15 pratiqués sur la surface périphérique externe de la tige et le verrou coulissant 19 monté de manière coulissante autour de la tige de piston 3 et associé aux ressorts de verrouillage 22 et de déverrouillage 24.

A partir de la position escamotée de la tige, visible sur la figure 2, la rotation de la vis motorisée 4 provoque le déplacement axial de l'écrou 25 à recirculation de billes et le déplacement consécutif de la tige.

Comme on le voit sur les figures 3 et 4, lors du déplacement de la tige, l'empreinte 15 de la tige 3 vient au contact de la tête 12 des crochets 10 des griffes 8, et provoquent par flexion une déformation radialement externe des griffes 8.

Lorsque les têtes 12 atteignent le méplat 17, elles se situent en regard et en appui axial contre l'extrémité distale du verrou 19 et provoquent le déplacement consécutif du verrou vers l'arrière en comprimant le ressort de verrouillage 22, libérant le logement 18 de la tige.

En référence à la figure 5, lorsque la tige 3 vient en appui contre une butée 27 de fin de course sur le cylindre, les griffes 4, grâce à leur élasticité, reprennent leur position initiale et s'engagent dans le logement 18 de la tige en libérant le verrou coulissant 19. Le verrou est alors déplacé vers l'avant sous l'action du ressort de verrouillage 22, et vient recouvrir les crochets 10 des griffes 8.

Finalement, la position verrouillée du verrou coulissant 19 est détectée lors de son passage en regard d'un ou de plusieurs capteurs de position 28.

Une information fiable et sûre « train sorti et verrouillé » peut alors être émise.

Durant l'opération inverse consistant à rentrer la tige 3 dans le cylindre 2 de l'actionneur, la vis motorisée 4 agit tout d'abord sur l'écrou 25 qui est à cet égard doté d'un doigt saillant 29 en appui contre un épaulement proximal du verrou de manière à déplacer le verrou coulissant 9 à l'encontre du ressort de déverrouillage 24.

En début de course, seul le verrou est déplacé de manière à libérer les têtes de griffe 12, la tige restant immobile.

Lorsque le ressort de déverrouillage est entièrement comprimé, un déplacement consécutif de la tige provoque un dégagement des griffes du logement 18 et leur déplacement le long du méplat 17 et de la rampe distale 16.

Dans l'exemple de réalisation qui vient d'être décrit, qui correspond à un verrouillage de l'actionneur électromécanique dans une position sortie de la tige, le dispositif de verrouillage est automatiquement activé et désactivé sous l'action seule de la vis motorisée.

Il est également possible, en variante, de prévoir un verrouillage de l'actionneur dans une position rentrée de la tige.

Dans ce cas, le verrouillage s'effectue sous l'action de la tige, tandis que le déverrouillage s'effectue sous l'action d'un moteur de désactivation du dispositif de verrouillage qui agit sur le tiroir du verrou pour le déverrouiller.

Dans le mode de réalisation illustré sur les figures, les griffes 8 dotées à leur extrémité libre du cochet élastique 10 sont prévues sur le cylindre 2, tandis que l'empreinte 15 est pratiquée dans la tige de piston 3.

Les crochets 10 sont par ailleurs tournés vers l'intérieur, en direction de l'empreinte.

La détection du verrouillage s'effectue en détectant la position du verrou coulissant 19.

Par ailleurs, le déverrouillage du verrou coulissant s'effectue au moyen de l'écrou qui déplace le verrou à l'encontre d'un ressort de verrouillage pour libérer les crochets.

C'est donc un élément interne au dispositif de verrouillage qui vient procéder au déverrouillage du verrou.

L'invention n'est toutefois pas limitée aux modes de réalisation décrits.

En effet, en variante, on utilise un moyen externe de déverrouillage agissant sur le verrou 19 mobile.

Par ailleurs, on ne sort pas non plus du cadre de l'invention lorsque les crochets sont portés par la tige de piston et l'empreinte correspondante pratiquée dans le cylindre, les crochets étant, dans ce cas, mobiles

## Revendications

1. Dispositif de verrouillage pour actionneur électromécanique comprenant une tige (3) mobile par rapport à un cylindre (2) sous l'action d'un moteur (5) d'actionnement de la tige, ledit dispositif comprenant un ensemble d'au moins un crochet (10) déplaçable entre une position de verrouillage dans laquelle lesdits crochets (10) s'encliquètent dans une empreinte (15) et une position de déverrouillage dans laquelle ledit ensemble de crochets (10) est dégagé de l'empreinte (15), ledit ensemble de crochets et l'empreinte étant prévus l'un sur le cylindre et l'autre sur la tige (3), **caractérisé en ce qu'**il comporte un verrou coulissant (19) par rapport auxdits crochets et à l'empreinte entre une position de maintien desdits crochets (10) en position de verrouillage et une position de libération desdits crochets sous l'action du moteur d'actionnement de la tige (3).

2. Dispositif selon la revendication 1, comprenant un écrou (25) lié au verrou et apte à déplacer le verrou coulissant (19) à l'encontre d'un ressort de verrouillage (22) entre une position de verrouillage dans laquelle le verrou coulissant (19) recouvre au moins partiellement lesdits crochet (10) et une position de déverrouillage libérant les crochets.

3. Dispositif selon la revendication 2, dans lequel le verrou (19) est positionné par rapport auxdits crochets de sorte que le verrou soit escamoté à l'encontre de l'effort exercé par le ressort sous l'action desdits crochets.

4. Dispositif selon l'une des revendications 2 et 3, dans lequel lesdits crochets (10) comportent au moins un pan incliné apte à coopérer avec une rampe de forme correspondante de l'empreinte (15).

5. Dispositif selon l'une quelconque des revendications 2 à 4, comprenant en outre un ressort de déverrouillage (24) destiné à être disposé entre l'écrou (25) de l'actionneur et la tige de l'actionneur (3).

6. Dispositif selon la revendication 5, dans lequel le ressort de déverrouillage (24) est précontraint en compression.

7. Dispositif selon l'une quelconque des revendications précédentes, comprenant en outre au moins un capteur de position (28) du verrou coulissant (19).

8. Dispositif selon l'une quelconque des revendications 1 à 7, comprenant en outre un moteur de commande du déplacement du verrou apte à provoquer le déplacement du verrou lors du déverrouillage.

9. Actionneur électromécanique, comprenant une tige (3) mobile par rapport à un cylindre (2) sous l'action d'un moteur d'actionnement de la tige, **caractérisé en ce qu'**il comprend un dispositif interne de verrouillage selon l'une quelconque des revendications 1 à 8.

10. Actionneur selon la revendication 9, comprenant un ensemble d'au moins un crochet (10) prévu sur le cylindre et une empreinte (15) prévue sur la tige (3) de sorte que le dispositif de verrouillage agisse en position déployée de la tige, **caractérisé en ce qu'**il comprend un verrou (19) monté de manière coulissante autour de la tige de l'actionneur et un ressort de verrouillage (22) interposé entre le verrou et une butée liée au cylindre, le verrou étant déplaçable d'une position de verrouillage dans laquelle le verrou coulissant (25) recouvre au moins partiellement lesdits crochet (10) à une position de déverrouillage libérant le crochet, sous l'action desdits crochets, à l'encontre de l'effort exercé par le ressort de verrouillage.

## Patentansprüche

1. Verriegelungsvorrichtung für einen elektromechanischen Aktuator, der eine Stange (3) umfasst, die unter der Wirkung eines Betätigungsmotors (5) der Stange im Verhältnis zu einem Zylinder (2) beweglich ist, wobei die Vorrichtung einen Satz von mindestens einem Haken (10) umfasst, der zwischen einer Verriegelungsposition, in der die Haken (10) in eine Aussparung (15) einrasten, und einer Entriegelungsposition, in der der Satz von Haken (10) aus der Aussparung (15) freigegeben ist, wobei der Satz von Haken und die Aussparung jeweils am Zylinder und an der Stange (3) vorgesehen sind, **dadurch gekennzeichnet, dass** sie einen Schieberiegel (19) in Bezug auf die Haken und die Aussparung zwischen einer Halteposition der Haken (10) in der Verriegelungsposition und einer Freigabeposition der Haken unter der Wirkung des Betätigungsmotors der Stange (3) aufweist.

2. Vorrichtung nach Anspruch 1, die eine Sicherungsmutter (25) umfasst, die mit dem Riegel verbunden und dazu ausgelegt ist, den Schieberiegel (19) gegen eine Verriegelungsfeder (22) zwischen einer Verriegelungsposition, in der der Schieberiegel (19) die Haken (10) zumindest teilweise abdeckt, und einer Entriegelungsposition, die die Haken freigibt, zu bewegen.

3. Vorrichtung nach Anspruch 2, bei der der Riegel (19) im Bezug auf die Haken so positioniert ist, dass der Riegel gegen die Kraft, die von der Feder unter der Wirkung der Haken ausgeübt wird, zurückgezogen wird.

4. Vorrichtung nach einem der Ansprüche 2 und 3, bei der die Haken (10) mindestens eine geneigte Fläche aufweisen, die dazu ausgelegt ist, mit einer entsprechend geformten Rampe der Aussparung (15) zusammenzuwirken.

5. Vorrichtung nach einem der Ansprüche 2 bis 4, die ferner eine Entriegelungsfeder (24) umfasst, die dazu bestimmt ist, zwischen der Sicherungsmutter (25) des Aktuators und der Stange des Aktuators (3) angeordnet zu sein.

6. Vorrichtung nach Anspruch 5, bei der die Entriegelungsfeder (24) auf Druck vorgespannt ist.

7. Vorrichtung nach einem der vorhergehenden Ansprüche, die ferner einen Positionssensor (28) für den Schieberiegel (19) umfasst.

8. Vorrichtung nach einem der Ansprüche 1 bis 7, die ferner einen Steuerungsmotor für die Bewegung des Riegels umfasst, der dazu ausgelegt ist, die Bewegung des Riegels beim Entriegeln auszulösen.

9. Elektromechanischer Aktuator, der eine Stange (3) umfasst, die im Bezug auf einen Zylinder (2) unter der Wirkung eines Betätigungsmotors der Stange beweglich ist, **dadurch gekennzeichnet, dass** er eine interne Verriegelungsvorrichtung nach einem der Ansprüche 1 bis 8 umfasst.

10. Aktuator nach Anspruch 9, der einen Satz von mindestens einem Haken (10), der am Zylinder vorgesehen ist, und eine Aussparung (15), die an der Stange (3) vorgesehen ist, umfasst, so dass die Verriegelungsvorrichtung in der ausgefahrenen Position der Stange wirkt, **dadurch gekennzeichnet, dass** er einen Riegel (19), der verschiebbar um die Stange des Aktuators montiert ist, und eine Verriegelungsfeder (22) umfasst, die zwischen dem Riegel und einem mit dem Zylinder verbundenen Anschlag angeordnet ist, wobei der Riegel unter der Wirkung der Haken gegen die von der Verriegelungsfeder ausgeübte Kraft aus einer Verriegelungsposition, in der der Schieberiegel (25) zumindest teilweise die Haken (10) bedeckt, in eine Entriegelungsposition, in der der Haken freigegeben ist, verschiebbar ist.

## Claims

1. A locking device for an electromechanical actuator comprising a rod (3) being movable relative to a cylinder (2) under the action of a motor (5) for actuating the rod, said device comprising a set of at least one hook (10) displaceable between a locking position in which said hooks (10) snap fit into a recess (15) and an unlocking position in which said set of hooks (10) is disengaged from the recess (15), said set of hooks and the recess being provided one on the cylinder and the other on the rod (3), **characterised in that** it includes a lock (19) being slidable relative to said hooks and to the recess between a position for holding said hooks (10) in the locking position and a position for releasing said hooks under the action of the motor for actuating the rod (3).

2. The device according to claim 1, comprising a nut (25) connected to the lock and capable of displacing the slidable lock (19) against a locking spring (22) between a locking position in which the slidable lock (19) at least partially covers said hooks (10) and an unlocking position releasing the hooks.

3. The device according to claim 2, wherein the lock (19) is positioned relative to said hooks so that the lock is retracted against the load exerted by the spring under the action of said hooks.

4. The device according to one of claims 2 to 3, wherein said hooks (10) include at least one tilted face capable of cooperating with a correspondingly shaped ramp of the recess (15).

5. The device according to any of claims 2 to 4, further comprising an unlocking spring (24) to be disposed between the nut (25) of the actuator and the rod (3) of the actuator.

6. The device according to claim 5, wherein the unlocking spring (24) is compressively pre-stressed.

7. The device according to any of the preceding claims, further comprising at least one position sensor (28) for the slidable lock (19).

8. The device according to any of claims 1 to 7, further comprising a motor for controlling displacement of the lock capable of causing displacement of the lock upon unlocking.

9. An electromechanical actuator, comprising a rod (3) being movable relative to a cylinder (2) under the action of a motor for actuating the rod, **characterised in that** it comprises an inner locking device according to any of claims 1 to 8.

10. The actuator according to claim 9, comprising a set of at least one hook (10) provided on the cylinder and a recess (15) provided on the rod (3) so that the locking device acts in the extended position of the rod, **characterised in that** it comprises a lock (19) slidably mounted about the rod of the actuator and a locking spring (22) interposed between the lock and a stop connected to the cylinder, the lock being displaceable from a locking position in which the slidable lock (25) at least partially covers said hooks (10) to an unlocking position releasing the hook, under the action of said hooks, against a load exerted by the locking spring.
